# FASCICULE DE BREVET EUROPEEN

(11) **EP 2 154 977 B1**
(45) Date de publication et mention de la délivrance du brevet: **12.10.2016**
(21) Numéro de dépôt: 08802891.5
(22) Date de dépôt: 04.06.2008
(51) Int. Cl.: A22C 29/02, A23B 4/09, A23L 3/375, A23B 4/06, A22B 3/08

(54) **PROCÉDÉ DE TRAITEMENT DE LANGOUSTINES OU DE CREVETTES, EN VUE DE LEUR CONSERVATION**
VERFAHREN ZUR VERARBEITUNG VON KAISERGRANATEN ODER GARNELEN, UNTER BERÜCKSICHTIGUNG IHRER LAGERBARKEIT
METHOD FOR TREATING LANGOUSTINES OR SHRIMPS WITH A VIEW TO THE STORAGE THEREOF

(30) Priorité: 12.06.2007 FR 0704164
(43) Date de publication de la demande: 24.02.2010
(73) Titulaire: Bienfai, 29800 Landerneau (FR)
(72) Inventeur: LE LEZ, Jean, F-29800 Landerneau (FR)
(74) Mandataire: Ermeneux, Bertrand
(86) Numéro de dépôt international: PCT/EP2008/056887
(87) Numéro de publication internationale: WO 2008/155220

(56) Documents cités:
- WO-A-99/44433
- FR-A- 2 854 543
- US-A- 3 296 656
- US-A- 4 051 690
- US-A- 4 309 449

## Description

La présente invention concerne un procédé de traitement de langoustines ou de crevettes en vue de leur conservation.

Elle concerne également un procédé de transformation de langoustines ou de crevettes pour la production de crustacés cuits, en vue de leur vente.

L'invention a été conçue et développée pour le traitement de langoustines. Elle peut cependant s'appliquer aux crevettes.

Les langoustines qui sont pêchées en mer, au chalut, en des zones éloignées des côtes, sont traitées sur le bateau de pêche en vue de leur conservation.

En effet, elles sont sensibles à un phénomène de dégradation enzymatique (mélanose) qui induit un noircissement de certaines parties du corps et des pattes du crustacé.

Pour pallier cet inconvénient, une technique traditionnelle de conservation consiste à soumettre les langoustines encore vivantes, retenues après triage et calibrage, à un lavage par arrosage d'eau de mer puis à un saupoudrage par un produit en poudre anti-oxydant, à savoir du métabisulfite de sodium. Les langoustines, contenues dans des paniers, sont ensuite descendues en cale et conservées dans de la glace jusqu'au retour du bateau au port.

Ce genre de traitement n'est pas satisfaisant.

En effet, s'il freine le phénomène de mélanose, il ne l'élimine pas complètement.

En outre, le dosage et l'homogénéité de la distribution du produit anti-oxydant sont difficiles à maîtriser, et aussi bien un surdosage qu'un sous dosage peut s'avérer catastrophique quant à la qualité sanitaire et marchande du lot pêché.

Enfin, un tel traitement nécessite de recourir à un additif chimique qui peut poser des problèmes de santé pour les pêcheurs ayant à le manipuler ainsi que pour le consommateur ; de plus, la présence d'un produit chimique va à l'encontre de la tendance des consommateurs qui souhaitent légitimement acheter des produits naturels.

L'invention vise à résoudre ces difficultés, en proposant un procédé de traitement de crustacés, et notamment de langoustines, en vue de leur conservation, qui ne fasse appel à aucun additif chimique, les seuls produits mis en oeuvre étant l'eau et le sel (chlorure de sodium).

Il ressort des essais faits par l'inventeur, que si on expose une langoustine vivante, fraîchement capturée, à une température très basse, au moins inférieure à - 10°C, celle-ci est soumise de manière douce et progressive à une anesthésie par endormissement qui ne génère pas de stress, puis est tuée par le froid.

Dans ces conditions, probablement grâce à l'absence de stress, on n'observe pas le phénomène de développement de mélanose, et la langoustine tuée et refroidie est intacte sur les plans physico-chimique et visuel.

Ces essais ont également montré que la méthode idéale pour ce faire, adaptée à un traitement sur un bateau de pêche, est d'immerger les langoustines dans un bain de saumure à basse température, après quoi on les rince à l'eau froide en les exposant à des jets d'eau pulvérisée, puis on les congèle.

L'invention a donc pour objet un procédé de traitement de langoustines ou crevettes, en vue de leur conservation, sans recourir à des additifs chimiques, et ce procédé comprend les étapes suivantes :
a) on immerge les langoustines ou les crevettes vivants dans un bain de saumure dont la température est inférieure à environ -10°C, et de préférence à -15°C, ce qui a pour effet de les anesthésier et de les tuer, la durée de cette immersion étant comprise entre 2 minutes et 10 minutes;
b) on sort les langoustines ou les crevettes ainsi tués et réfrigérés (congelés) du bain de saumure ;
c) on rince les crustacés à l'eau froide à l'aide de jets d'eau pulvérisée, de manière à les débarrasser du sel de la saumure et à les glacer en surface ;
d) on congèle les langoustines ou les crevettes et on les stocke à l'état congelé à une température inférieure ou égale à -18°C.

L'état de la technique en la matière peut être illustré par les documents US - 4 309 449 (D1), WO 99/44 433 (D2) et US 3 296 656.

Le document D1 décrit un procédé de traitement de crustacés, des crabes en l'occurrence ; il préconise à l'étape (a) un trempage des crustacés dans un bain de saumure dont la température est comprise entre - 7 et 10° F durant 20 à 60 mn, de préférence entre 30 et 50 mn, et avantageusement 35 mn environ (voir colonne 3, lignes 60-64 et abrégé).

Cette fourchette de temps ne correspond pas à celle préconisée par le procédé de l'invention.

De plus, selon D1, un glaçage en surface éventuellement prévu à l'issue de l'étape (a) est réalisé par trempage des crustacés dans un bain d'eau réfrigérée (voir colonne 4, lignes 11-16 et revendication 1, alinéa f), et en aucun cas par exposition des crustacés à des jets d'eau pulvérisée.

Ce procédé ne prévoit pas, à l'issue de l'immersion des crustacés dans le bain de saumure et du glaçage, la congélation des crustacés mentionnée à l'étape (d) du procédé de l'invention.

Enfin, le D1 préconise de faire appel à un additif chimique, en l'occurrence un agent démousseur chimique tel qu'une composition comprenant :
- des émulsifiants en stéarate de diméthylpolysiloxane ;
- des stabilisants en gomme de xanthan ;
- du méthylparaben.

Selon la présente invention, au contraire, on ne fait pas usage d'additifs chimiques.

Le document D2 a pour objet une méthode pour congeler des produits de la mer, notamment des crustacés.

Cette méthode comprend une étape préalable de "pré-congélation" des produits par immersion dans la saumure, à une température comprise entre - 5°C et - 9°C, suivie d'un glaçage en surface par trempage dans de l'eau froide.

Les produits en question sont des crevettes précuites, et non des crustacés vivants.

Par conséquent, l'homme du métier n'est pas amené à s'inspirer du D2 pour traiter des langoustines ou crevettes vivants, dès lors qu'il souhaite les anesthésier par endormissement de manière douce et progressive, afin d'empêcher le développement de mélanose. De plus, le traitement du D2 prévoit une étape de "pré-congélation" des produits, par immersion dans un bain de saumure, à une température s'inscrivant dans une fourchette de - 5°C à - 9°C ; cette étape n'est donc pas assimilable à l'étape (a) du procédé selon l'invention, qui se fait à une température inférieure à - 10°C ; enfin, l'opération de rinçage / glaçage proposée dans le document D2, tout comme celui du D1, se fait par immersion des produits dans de l'eau froide et non à l'aide de jets d'eau pulvérisée.

Par ailleurs, selon un certain nombre de caractéristiques additionnelles, non limitatives du procédé de l'invention :
- la température du bain de saumure mis en oeuvre à l'étape (a) est comprise entre -15°C et -20°C ;
- à l'étape (c) on rince les crustacés à l'aide de jets d'eau pulvérisée glacée, dont la température est avantageusement comprise entre 0°C et + 3° C ;

Le procédé de transformation de langoustines ou crevettes, qui fait également l'objet de la présente invention, comprend une première phase de préparation de langoustines ou de crevettes congelés conforme à celle indiquée ci-dessus, à l'issue de laquelle on soumet les crustacés aux étapes suivantes :
e) on les décongèle ;
f) on les cuit à l'eau chaude ;
g) on les refroidit ;
h) on les égoutte.

On produit ainsi des crustacés cuits.

Selon un certain nombre de caractéristiques additionnelles possibles de ce procédé de transformation :
- à l'étape (e) on élève la température des crustacés à une valeur de l'ordre de + 2°C à + 10°C ;
- à l'étape (f) on cuit les crustacés dans une eau dont la température est comprise entre + 80°C et + 100°C environ ;
- à l'issue de l'étape (h) d'égouttage, on conditionne les crustacés sous film protecteur et/ou sous gaz inerte ;
- à l'issue de l'étape (h) d'égouttage, et le cas échéant, de conditionnement subséquent, on congèle les crustacés ;
- en vue de leur immersion dans la saumure prévue à l'étape (a) on place un lot de crustacés vivants dans un contenant à paroi perforée, à l'issue de l'étape (h) d'égouttage, et le cas échéant, de conditionnement et/ou de congélation subséquents, on livre les crustacés en un point de vente, et durant l'ensemble des traitements auxquels ils sont exposés, jusqu'à leur livraison au point de vente, ces crustacés restent contenus dans leur contenant initial.
- ces contenants sont réutilisés (c'est-à-dire recyclés en boucle fermée).

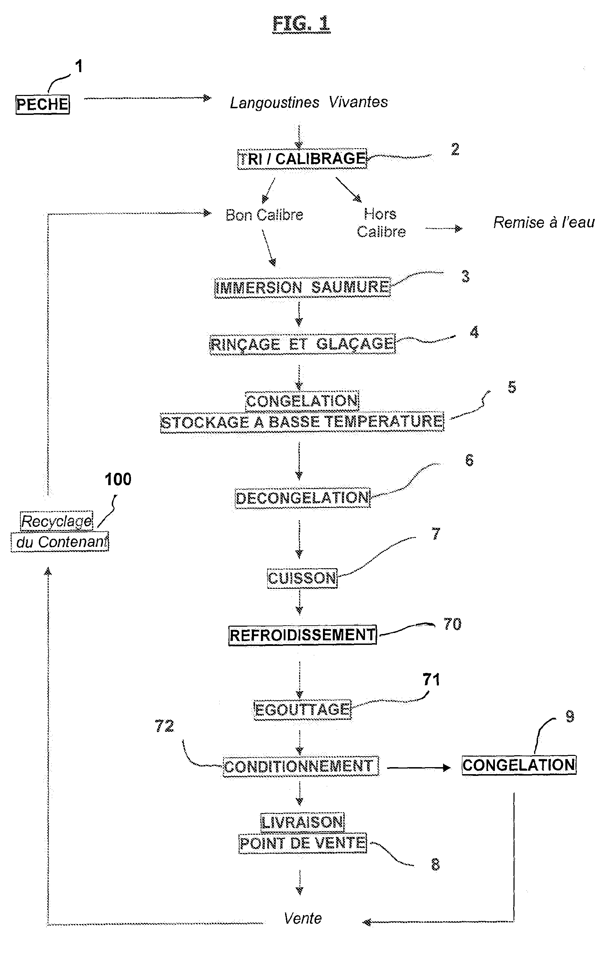

Un mode de réalisation possible de l'invention va maintenant être décrit en référence à la figure 1 annexée, qui est un diagramme avec schémas-blocs illustrant le procédé.

Les langoustines sont capturées, par exemple pêchées au chalut dans la mer ou dans l'océan, comme symbolisé par le bloc 1, et remontées vivantes sur le bateau de pêche.

Celui-ci est équipé d'une installation de congélation comprenant au moins une cuve contenant de la saumure portée et maintenue à basse température.

La saumure est une solution aqueuse contenant du chlorure de sodium à une concentration de 30% environ.

Sa température est comprise entre - 15°C et - 20°C, par exemple égale à - 18°C environ.

Immédiatement après avoir été pêchées et remontées à bord, les langoustines sont triées et calibrées manuellement, comme symbolisé par le bloc 2.

Les produits de la mer indésirables captés par le chalut, ainsi que les langoustines trop petites, hors calibre, sont rejetés à l'eau.

Les langoustines de bon calibre, toujours vivantes, éventuellement après avoir été lavées à l'eau de mer, sont déposées dans des contenants, par exemple des bacs en plastique à paroi perforée.

Chaque bac est dimensionné pour en contenir une quantité donnée, qu'on appellera « lot ».

Ces bacs sont ensuite plongés et immergés dans la cuve contenant la saumure froide, comme symbolisé par le bloc 3.

La densité de cette saumure est supérieure à 1, voisine de 1,2.

Les langoustines ont donc tendance à flotter, et il est donc nécessaire de les forcer à pénétrer dans le bain de saumure.

A cet effet, les bacs peuvent être pourvus d'un couvercle, également avantageusement perforé, et des moyens sont prévus pour les plonger dans le bain et les y maintenir immergés durant un certain temps. Les perforations prévues dans la paroi du bac et, éventuellement, dans son couvercle, autorisent le passage de la saumure liquide à l'intérieur du bac, et chaque langoustine s'y trouve noyée.

Une autre solution est d'utiliser des bacs sans couvercle (ouverts donc vers le haut), mais que l'on fait passer sous une plaque de retenue horizontale fixe solidaire du bac, immergée dans la saumure froide.

La durée d'immersion est avantageusement comprise entre 2 et 10 minutes.

Durant cette opération, les langoustines, dont la température était initialement par exemple de + 20°C environ, sont portées à une température largement négative, à titre indicatif comprise entre -12°C et -20°C.

Ceci a pour effet de les endormir et de les tuer sans les stresser.

On extrait ensuite les bacs de la cuve, et la saumure s'en échappe.

Les langoustines tuées et froides sont maintenues dans leur bac et sont ensuite soumises à un douchage et un glaçage superficiel, symbolisé par le bloc 4.

Cette opération peut se faire avantageusement en faisant passer le bac sous des jets d'eau pulvérisée dont la température est voisine de 0°C, par exemple comprise entre 0 et +2°C. Ceci a pour effet de rincer les langoustines, en les débarrassant du sel provenant du saumurage, et d'y former une fine pellicule de glace solide, qui se forme rapidement tout autour de chaque langoustine, en raison de la basse température à laquelle elle se trouve. Cette pellicule forme une couche protectrice qui va constituer une barrière contre les agents pathogènes.

A l'étape suivante, on congèle les langoustines à sec, toujours contenues dans leur bac d'origine. Cette opération, symbolisée sur le dessin par le bloc 5, est faite par un procédé classique, par exemple par exposition des produits à un flux d'air très froid, afin de les porter à une température inférieure à -18°C, par exemple à -20°C, après quoi on les on les maintient stockés dans leur bac à cette température, en chambre froide, ce qui permet une longue conservation.

Toutes ces étapes peuvent être réalisées sur le bateau de pêche, dès lors qu'il est équipé d'une installation ad hoc.

Après débarquement, les bacs de langoustines ainsi traitées peuvent être commercialisés en l'état ou être transférés dans une unité de transformation.

Le schéma de la figure 1 prévoit cette seconde hypothèse.

Une fois arrivées dans l'unité de transformation, les langoustines (toujours contenues dans leur bac d'origine) peuvent être à nouveau stockées en chambre froide, ou traitées immédiatement en vue de leur cuisson.

A cet effet, on procède à leur décongélation, symbolisée par le bloc 6 sur le dessin.

Pour cela, on expose les langoustines (toujours contenues dans leur bac d'origine) à une atmosphère à température positive, de telle façon que leur température atteigne une valeur comprise entre + 2°C et +4°C environ.

La durée de ce traitement de réchauffement est avantageusement comprise entre 2 et 30 minutes, par exemple de l'ordre d'une dizaine de minutes.

On procède ensuite à la cuisson des langoustines (toujours contenues dans leur bac d'origine), avantageusement dans de l'eau chaude dont la température est comprise entre 80°C et 100°C. Cette opération, dont la durée est avantageusement comprise entre 2 et 30 minutes, par exemple de l'ordre d'un quart d'heure, est symbolisée par le bloc 7 sur le dessin.

Après cuisson, elles sont refroidies (bloc 70) à une température comprise entre + 2°C et +4°C environ, et égouttées (bloc 71).

Ensuite, toujours présentes dans leur bac d'origine, elles sont conditionnées sous film plastique, éventuellement sous atmosphère neutre (gaz inerte tel que l'azote par exemple), opération symbolisée sur le dessin par le bloc 72.

Elles sont alors prêtes à être vendues.

Pour cela elles peuvent être livrées directement (à température comprise entre + 2°C et +4°C environ), au point de vente (bloc 8) ou être congelées (bloc 9) avant d'être vendues.

Le point de vente peut notamment être un supermarché ou une poissonnerie.

Dans chacune de ces deux hypothèses, les bacs ayant contenu les langoustines sont avantageusement recyclées, c'est-à-dire réutilisés, après avoir été lavés et éventuellement désinfectés, pour recevoir un nouveau lot de langoustines (bloc 100).

Le fait que les langoustines restent dans leur contenant d'origine d'un bout à l'autre de la chaîne (depuis le calibrage jusqu'à la vente) présente plusieurs avantages.

L'un de ces avantages est qu'ils ne subissent pas de manutentions intermédiaires individuelles pouvant être traumatisantes, qui risqueraient par exemple de briser leurs pattes.

Un autre est que la traçabilité du produit est assurée dès lors qu'au départ le contenant qui leur est affecté est identifié, par étiquetage classique et/ou informatique.

De plus, le recyclage des contenants est évidemment intéressant sur le plan écologique.

Comme indiqué plus haut, le domaine de l'invention s'étend à divers autres crustacés que les langoustines.

Les traitements des crustacés, depuis leur tri et leur calibrage alors qu'ils sont vivants jusqu'à leur congélation à l'état crus ne sont pas forcément effectués sur le bateau de pêche. Ils peuvent être faits à terre en tout ou partie, en particulier dans le cadre d'une production aquacole.

## Revendications

1. Procédé de traitement de langoustines ou de crevettes, en vue de leur conservation, sans recourir à des additifs chimiques, comprenant les étapes suivantes :
a) on immerge (3) les langoustines ou les crevettes vivantes dans un bain de saumure dont la température est inférieure à environ -10°C, et de préférence à -15°C, ce qui a pour effet de les anesthésier et de les tuer, la durée de cette immersion étant comprise entre 2 mn et 10 mn ;
b) on sort les langoustines ou les crevettes ainsi tués et réfrigérés du bain de saumure;
c) on rince (4) les langoustines ou les crevettes à l'eau froide, à l'aide de jets d'eau pulvérisée, de manière à les débarrasser du sel de la saumure et à les glacer en surface ;
d) on congèle (5) les langoustines ou les crevettes et on les stocke à l'état congelé à une température inférieure ou égale à -18°C.

2. Procédé selon la revendication 1, **caractérisé par le fait que** la température du bain de saumure mis en oeuvre à l'étape (a) est comprise entre -15°C et -20°C.

3. Procédé selon la revendication 1 ou 2, **caractérisé par le fait qu'**à l'étape (c) on rince les langoustines ou les crevettes à l'aide de jets d'eau pulvérisée dont la température est comprise entre 0 et + 3°C.

4. Procédé de production de crustacés cuits, **caractérisé par le fait qu'**il comprend une première phase de préparation de langoustines ou de crevettes congelées conforme à l'une quelconque des revendications 1 à 3, et qu'à l'issue de cette phase on soumet les langoustines ou les crevettes aux étapes suivantes:
e) on les décongèle (6) ;
f) on les cuit (7) à l'eau chaude;
g) on les refroidit (70) ;
h) on les égoutte (71).

5. Procédé selon la revendication 4, **caractérisé par le fait qu'**à l'étape (e) on élève la température des langoustines ou des crevettes à une valeur de l'ordre de + 2°C à + 4°C.

6. Procédé selon la revendication 4 ou la revendication 5, **caractérisé par le fait qu'**à l'étape (f) on cuit les langoustines ou les crevettes dans une eau dont la température est comprise entre + 80 et + 100°C environ.

7. Procédé selon l'une quelconque des revendications 4 à 6, **caractérisé par le fait qu'**à l'issue de l'étape (h) d'égouttage, on conditionne (72) les langoustines ou les crevettes sous film protecteur et/ou sous gaz inerte.

8. Procédé selon l'une quelconque des revendications 4 à 7, **caractérisé par le fait qu'**à l'issue de l'étape (h) d'égouttage, et le cas échéant, de conditionnement subséquent, on congèle (9) les langoustines ou les crevettes.

9. Procédé selon l'une quelconque des revendications 4 à 8, **caractérisé par le fait qu'**en vue de leur immersion dans la saumure prévue à l'étape (a) on place un lot de langoustines ou de crevettes vivantes dans un contenant à paroi perforée, qu'à l'issue de l'étape (h) d'égouttage, et le cas échéant, de conditionnement et/ou de congélation subséquents, on livre (8) les langoustines ou les crevettes en un point de vente, et que durant l'ensemble des traitements auxquels elles sont exposées, jusqu'à leur livraison au point de vente, ces langoustines ou crevettes restent contenues dans leur contenant initial.

10. Procédé selon la revendication 9, **caractérisé par le fait que** lesdits contenants sont réutilisés (100).

## Patentansprüche

1. Verfahren zur Behandlung von Scampi oder von Garnelen zu ihrer Konservierung, ohne chemische Zusätze zu verwenden, umfassend die folgenden Schritte:
a) die lebenden Scampi oder die lebenden Garnelen werden in ein Salzbad eingetaucht (3), dessen Temperatur niedriger als etwa -10 °C und vorzugsweise -15 °C ist, wodurch sie betäubt und getötet werden, wobei die Dauer dieses Eintauchens zwischen 2 min und 10 min beträgt;
b) die Scampi oder die Garnelen, die auf diese Weise getötet und tiefgekühlt werden, werden aus dem Salzbad herausgenommen;
c) die Scampi oder die Garnelen werden mit kaltem Wasser mit Hilfe von Sprühwasserstrahlen derart abgespült (4), um von ihnen das Salz und das Salzbad zu entfernen und sie an der Oberfläche zu glasieren;
d) die Scampi oder die Garnelen werden eingefroren (5) und sie werden im eingefrorenen Zustand bei einer Temperatur von weniger als oder gleich -18 °C gelagert.

2. Verfahren nach Anspruch 1, **dadurch gekennzeichnet, dass** die Temperatur des Salzbads, das in dem Schritt (a) verwendet wird, zwischen -15 °C und -20 °C beträgt.

3. Verfahren nach Anspruch 1 oder 2, **dadurch gekennzeichnet, dass** in dem Schritt (c) die Scampi oder die Garnelen mit Hilfe von Strahlen aus gesprühtem Eiswasser abgespült werden, dessen Temperatur vorteilhafterweise zwischen 0 °C und + 3 °C beträgt.

4. Verfahren zur Herstellung von gekochten Krebstieren, **dadurch gekennzeichnet, dass** es eine ersten Phase des Vorbereitens von Scampi oder von Garnelen aufweist, die nach einem der Ansprüche 1 bis 3 eingefroren werden, und dass nach Abschluss dieser Phase die Scampi und die Garnelen den folgenden Schritten unterworfen werden:
e) sie werden aufgetaut (6);
f) sie werden (7) im heißen Wasser gekocht;
g) sie werden abgekühlt (70);
h) sie werden abtropfen gelassen (71).

5. Verfahren nach Anspruch 4, **dadurch gekennzeichnet, dass** in dem Schritt (e) die Temperatur der Scampi oder der Garnelen auf einen Wert von der Größenordnung von + 2 °C bis + 4 °C erhöht wird.

6. Verfahren nach Anspruch 4 oder 5, **dadurch gekennzeichnet, dass** in dem Schritt (f) die Scampi oder die Garnelen in einem Wasser gekocht werden, dessen Temperatur etwa zwischen + 80 °C und + 100 °C beträgt.

7. Verfahren nach einem der Ansprüche 4 bis 6, **dadurch gekennzeichnet, dass** nach Abschluss des Schritts (h) des Abtropfens die Scampi oder die Garnelen unter einem Schutzfilm und/oder unter Inertgas verpackt werden (72).

8. Verfahren nach einem der Ansprüche 4 bis 7, **dadurch gekennzeichnet, dass** nach Abschluss des Schritts (h) des Abtropfens und gegebenenfalls des nachfolgenden Verpackens die Scampi oder die Garnelen eingefroren (9) werden.

9. Verfahren nach einem der Ansprüche 4 bis 8, **dadurch gekennzeichnet, dass** ein Los von lebenden Scampi oder von lebenden Garnelen zu ihrem Eintauchen in das Salzbad, das in dem Schritt (a) vorgesehen ist, in einem Behälter mit perforierter Wand angeordnet wird, dass nach Abschluss des Schritts (h) des Abtropfens und gegebenenfalls des nachfolgenden Verpackens und/oder des nachfolgenden Einfrierens die Scampi oder die Garnelen an eine Verkaufsstelle geliefert werden (8) und dass diese Scampi oder Garnelen während der Gesamtheit der Behandlungen, denen sie ausgeliefert werden, bis zu ihrer Lieferung an die Verkaufsstelle in ihrem anfänglichen Behälter enthalten bleiben.

10. Verfahren nach Anspruch 9, **dadurch gekennzeichnet, dass** die Behälter wiederverwendet werden (100).

## Claims

1. A method of processing langoustines and prawns for the preservation thereof, without resorting to chemical additives, comprising the following steps:
a) the live langoustines or the live prawns are immersed (3) in a brine bath whose temperature is about -10°C, and preferably -15°C, which causes them to be anaesthetized and killed, whereas said immersion lasts between 2 min and 10 min;
b) the langoustines or the prawns thus killed and refrigerated are extracted from the brine bath;
c) the langoustines or the prawns are rinsed (4) with cold water, using sprayed waterjets, so as to clean them from brine salt and glaze them on their surfaces;
d) the langoustines or the prawns and deep-frozen (5) and stored in deep-frozen condition at a temperature below -18°C.

2. The method of claims 1, **characterized in that** the temperature of the brine bath implemented at step (a) ranges between -15°C and -20°C.

3. Process according to claim 1 or 2, **characterized in that** at step (c) the langoustines or the prawns are rinsed using sprayed waterjets whose temperature ranges between 0 and +3°C.

4. A method of producing cooked shellfish, **characterized in that** it comprises a first step of preparation of deep-frozen langoustines or of prawns according to any of claims 1 to 3 and that upon completion of this step, the langoustines or the prawns are subjected to the following steps:
e) thawing (6);
f) cooking (7) in hot water;
g) cooling (70);
h) draining (71),

5. The method of claims 4, **characterized in that** at step (e) the temperature of the langoustines or of the prawns is raised to a value of the order of +2°C to +4°C.

6. A method according to claim 4 or claim 5, **characterized in that** at step (f) the langoustines or the prawns are cooked in a water whose temperature ranges between about +80 and +100°C.

7. Method according to any one of claims 4 to 6 **characterized in that** upon completion of step (h) of draining, the langoustines or the prawns are packaged (72) under a protective film and/or inert gas.

8. Method according to any one of claims 4 to 7 **characterized in that** upon completion of step (h) of draining, and possibly of subsequent packaging, the langoustines or the prawns (9) are deep-frozen.

9. Method according to any one of claims 4 to 8 **characterized in that** in view of their immersion in brine set forth at step (a), a batch of live langoustines or prawns is placed in a drilled wall container, that upon completion of step (h) of draining, and possibly of subsequent packaging and/or deep-freezing, the langoustines or the prawns are delivered (8) to a sale outlet, and that during all the processes to which they are subjected, up to delivery to the sale outlet, said langoustines or prawns are kept in their initial container.

10. The method of claims 9, **characterized in that** said containers are re-used (100).
